# EUROPEAN PATENT APPLICATION

(11) **EP 1 227 432 A1**
(43) Date of publication of application: **31.07.2002**
(21) Application number: 01410008.5
(22) Date of filing: 26.01.2001
(51) Int. Cl.: G06K 11/18

(54) **Printing mouse**

(71) Applicant: Hewlett-Packard Company, A Delaware Corporation, Palo Alto, CA 94304 (US)
(72) Inventor: Vicard, Dominique, Cidex 65B 38190 Bernin (FR)
(74) Representative: Jackson, Richard Eric

(57) **Abstract**

A printing mouse for printing an image onto a medium and for controlling a cursor on a monitor display has a pointing device and an ink jet print head. The pointing device converts movement of the housing over the medium into signals that control the cursor, while the inkjet print head deposits print-forming material onto the medium. The printing mouse has a toggle switch, wherein the toggle switch has a point mode associated with activating the pointing device, a scan mode associated with activating a scanning device (or location sensor), and a print mode associated with activating the printing device (or print head). In one embodiment, the printing mouse has a drive motor for automatically translating the printing mouse across the medium onto which an image is to be printed. The location sensor compares the image just printed with the image data in order to monitor the progress of the printing. Additionally or alternatively, the location sensor functions as the motion detector or pointing device by monitoring the movement of the printing mouse. For example, illumination patterns in the medium are used to track position of the housing. In another alternative, an image sensor on the printing mouse produces image data that is transmitted to the main processor.

## Description

### FIELD OF THE INVENTION

The present invention relates to ink jet printers, more particularly to an ink jet print head integrated into a computer mouse.

### BACKGROUND OF THE INVENTION

Often, a computer station has several components including a processor, a monitor display, a keyboard, a mouse, and a printer. The printer often takes up a great deal of space at the station and consequently is often placed away from the user in an inconvenient location.

### SUMMARY OF THE INVENTION

It is desirable to have a compact computer station and to have the printer located in a convenient location with respect to the station. The present invention is a printing mouse for printing an image onto a medium and for controlling a cursor on a monitor display. The printing mouse has a housing with a pointing device, and an ink jet cartridge with a print head. The pointing device converts movement of the housing over the medium into signals that control the cursor.

In one embodiment, the printing mouse has an interface that is capable of coupling the printing mouse to an electronic device having the monitor display and a main processor. A printing device, which includes the ink jet cartridge, is responsive to the main processor. The printing mouse may be connected to the main processor through a USB bus or wirelessly. In the wireless embodiment, the printing mouse has a power supply.

In one embodiment, a location sensor compares the image just printed with image data sent from the main processor in order to monitor the progress of the printing. Additionally or alternatively, the location sensor functions as the motion detector or pointing device by monitoring the movement of the printing mouse. For example, illumination patterns in the medium are used to track position of the housing. In another alternative, there is a scanning device with an image sensor that produces image data transmitted to the main processor.

In one embodiment, the printing mouse has a print button that activates a print command associated with the print head depositing print-forming material onto the medium. The printing mouse also has a toggle switch, wherein the toggle switch has a point mode associated with activating the pointing device, a scan mode associated with activating the scanning device, and a print mode associated with activating the printing device (or print head).

In one embodiment, the printing mouse has a mouse processor coupled with a memory that stores data received from the main processor, and has a drive motor that automatically translates the printing mouse across the medium onto which an image is to be printed.

In one embodiment, a coupling device couples the processor with the printing mouse. The coupling device connects with the main processor through, for example, a parallel port. In one embodiment, the coupling device is wirelessly connected to the printing mouse. In one embodiment, a service station services the print head and stores the printing mouse.

A method of printing using the printing mouse comprises selecting a print area using the printing mouse in a point mode; and printing on a medium using the printing mouse in a print mode.

Many of the attendant features of this invention will be more readily appreciated as the same becomes better understood by reference to the following detailed description and considered in connection with the accompanying drawings in which like reference symbols designate like parts throughout.

### BRIEF DESCRIPTION OF THE DRAWINGS

FIG. 1 is an illustration of a printing mouse that is connected to a computer system by a cable in accordance with one embodiment of the present invention;
FIG. 2a illustrates block diagrams of the components of one embodiment of the printing mouse and a main processor of the computer system;
FIG. 2b illustrates block diagrams of the components of an alternative embodiment of the printing mouse and the main processor of the computer system;
FIG. 3 is a top view of the printing mouse in accordance with the present invention;
FIG. 4 is a bottom view of the printing mouse in accordance with the present invention;
FIG. 5 is a simplified pictographic cut-away side view of an imaging and navigation arrangement;
FIG. 6 is a conceptual representation of generating navigation information using location sensors of the printing mouse; and
FIG. 7 is a flow diagram of a method of printing an image using the printing mouse in accordance with the present invention.

### DETAILED DESCRIPTION

### Computer System

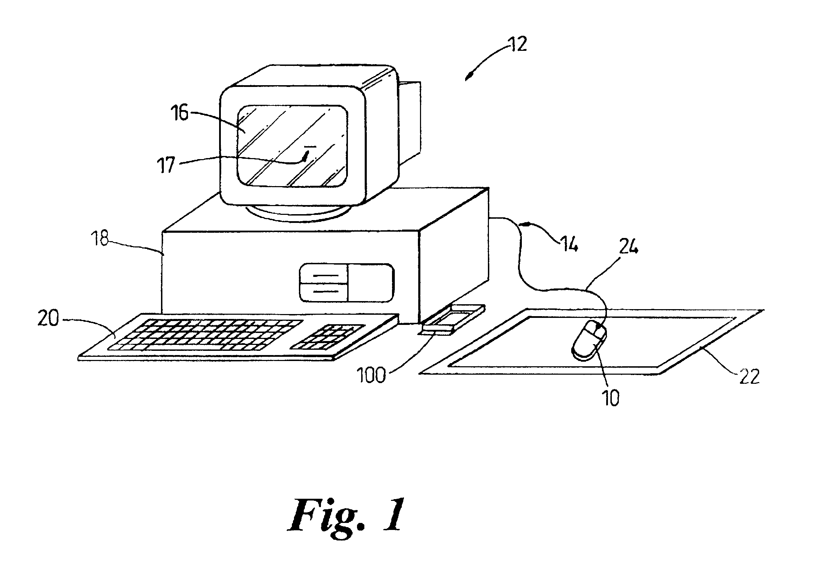

FIG. 1 of the present invention shows a printing mouse 10, a computer system 12, and an interface 14 connecting the printing mouse 10 to the computer system 12. The printing mouse 10 has an appearance of a conventional computer mouse. However, in addition to being a conventional computer mouse, the printing mouse 10 also functions as a printer as described in more detail below.

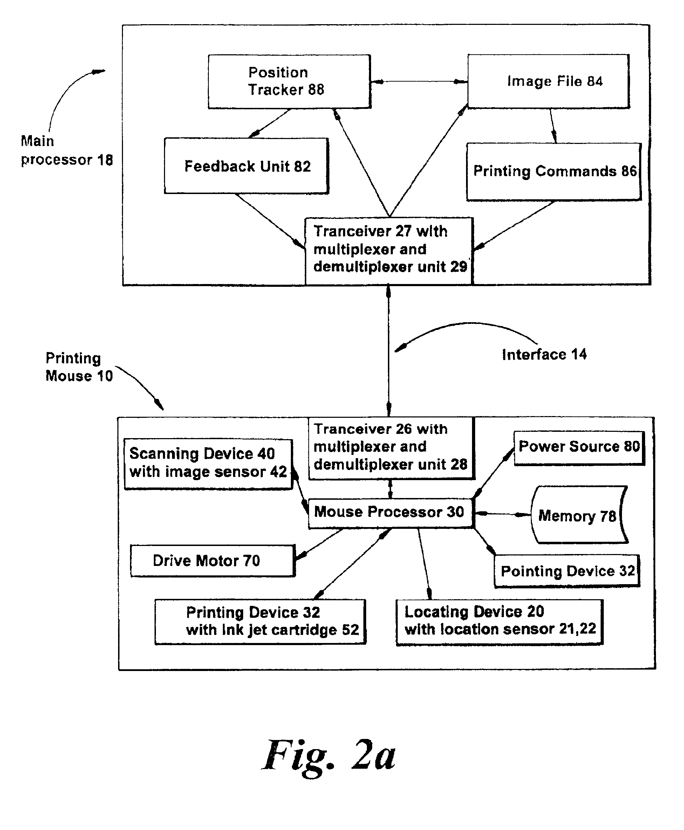

The host computer system 12 includes a monitor display 16 with a cursor 17, a main processor 18, and a keyboard 19. The computer system 12 may be a desktop computer as shown in FIG. 1, a personal digital assistant known as a PDA (not shown), or a laptop/mobile computer (not shown). As shown in FIG. 2a, the main processor 18 is coupled to a feedback unit 82, as described in more detail below.

In FIG. 1, the interface 14 is a cable 24. In one embodiment, the cable 24 is a USB bus connecting to the main processor 18.

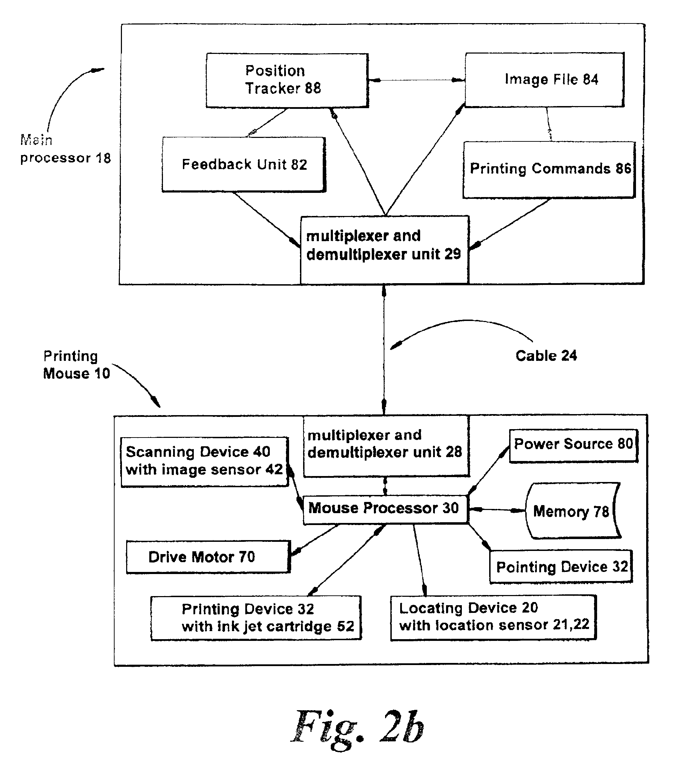

In an embodiment shown in FIG. 2a, the interface 14 includes transceivers 26, 27 in the printing mouse and the computer system, respectively. The transceivers 26, 27 correspond to each other and allow data to be wirelessly transmitted and received in between the printing mouse and the computer system. In the wireless connection embodiment, the data can be transmitted in a form of infrared or radio frequency signals. In one embodiment shown in FIG. 2a, the transceivers 26, 27 each have a multiplexer and demultiplexer unit 28, 29, respectively, such that the signals are combined into a single signal for transmission, and divided again upon receipt. Alternatively, each signal may be transmitted separately. As shown in the embodiment of FIG. 2b, the multiplexer and demultiplexer unit 28, 29 is used with the cable 24.

In the embodiment illustrated in FIG. 1, the computer system 12 has a service station 100 that services the printing mouse 10, including refilling ink, wiping and caping a print head described below. The service station has a priming system and a purge container (not shown). The service station 100 is also used as a protection device by storing the printing mouse when not in use. In another embodiment, the service station 100 recharges a battery 80 of the printing mouse.

In one embodiment, the printing mouse 10 is coupled with an existing computer station. In one embodiment, a coupling device (not shown) is connected through a parallel port of and/or a USB bus with the existing computer system. The coupling device couples the main processor 18 with the printing mouse 10. In one embodiment, the cable 24 connects the printing mouse and the existing computer system. In another embodiment, the coupling device wirelessly couples with the printing mouse 10. In this embodiment, the coupling device is part of the interface 14 and comprises the transceiver 27 for communicating with the printing mouse 10. In another embodiment, the coupling device has at least some of the features that are shown in FIGs. 2a and 2b as features of the main processor 18. For example, in addition to a transceiver 27, the coupling device may also comprise either or both the multiplexer and demultiplexer unit 29, and the feedback unit 82.

In FIG. 1, the printing mouse 10 is on a medium 11. The medium 11 is a surface that is capable of having an image printed on it. For example, the medium can be a paper substrate, a plastic substrate, a wooden substrate, a composite substrate, a metallic substrate, a layered substrate with several different materials, or other medium that has a surface for an image to be printed.

### Printing Mouse

The printing mouse 10 has a printing mouse processor 30. The principal function of the mouse processor 30 is to acquire the data from various sensors of the printing mouse in ways that correspond to a mode of operation of the printing mouse. The mouse processor 30 signals software in the main processor 18 of the computer of the operation that is occurring, such as scanning, printing, and pointing. As shown in the embodiment of FIG. 2a, the printing mouse processor 30 is coupled with the interface 14, a locating device 20 acquiring and processing position information, a pointing device 32 moving the cursor, a scanning device 40 producing image data, a printing device 50 printing print data, a drive motor 70 automatically moving the printing mouse, a memory 78 storing image data and/or print data, and a power source 80. The mouse processor 30 indicates to the power source 80 to provide power to the locating device 20, the printing device 50, pointing device 32, and/or the scanning device 40.

The arrows to and from the mouse processor 30 in FIGs. 2a and 2b indicate the flow of data. More particularly, the mouse processor 30 responds to data signals received through the interface 14 with the computer system 12. The pointing, scanning, locating and printing devices provide data back (and forth) to the mouse processor 30, as described in more detail throughout the application.

The mouse processor 30 has a navigation mode associated with the locating device 20, a point mode associated with activating the pointing device 32, a scan mode associated with activating the scanning device 40, and a print mode associated with activating the printing device 50. The printing mouse 10 is capable of operating in the print mode and in the point mode without the aid of the scanning device 40. In an alternate embodiment, there is no scanning device to track movement of the printing mouse 10 relative to the medium 11.

In one embodiment, the memory 78 is a conventional dynamic random access memory device. The storage capacity of the memory 78 can vary depending on the number of location sensors utilized by the printing mouse 10. The capacity of the memory 78 is not crucial to the invention. In one embodiment, the memory 78 stores printer driver software pre-programmed to convert image data to print data and drive the printing device 50. In another embodiment, the memory 78 is coupled to read-only memory (not shown) that is programmed with the printer driver software.

In an alternative embodiment, the printing mouse 10 does not contain the processor 30 and the memory 78. The functions of the processor 30 and the memory 78 are performed by the host computer system 12. However, the printing operation of the printing mouse 10 in this embodiment functions in the same manner as described below.

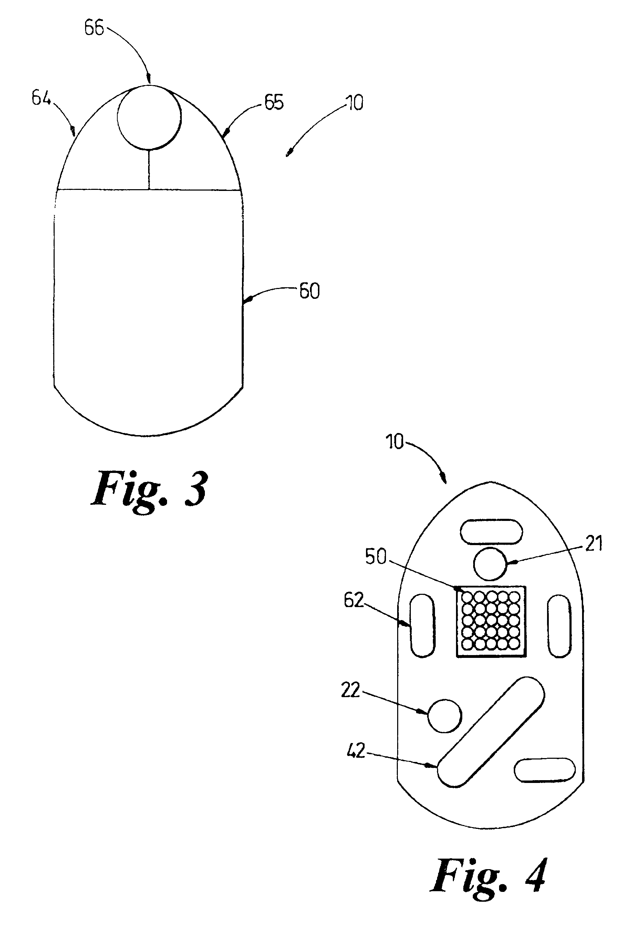

As shown in a plan view of the printing mouse 10 in FIG. 3, the printing mouse has a housing 60 with buttons 64, 65, and 66 to activate commands related to at least one of pointing, scanning, and printing, as described in more detail below. The housing 60 has a bottom surface 68 as shown in FIG. 4. Along the bottom surface 68 is an inkjet printer cartridge 52, which is adjacent at least one of location sensors 21, 22, an image sensor 42 of the scanning device 40, and support spacers 62.

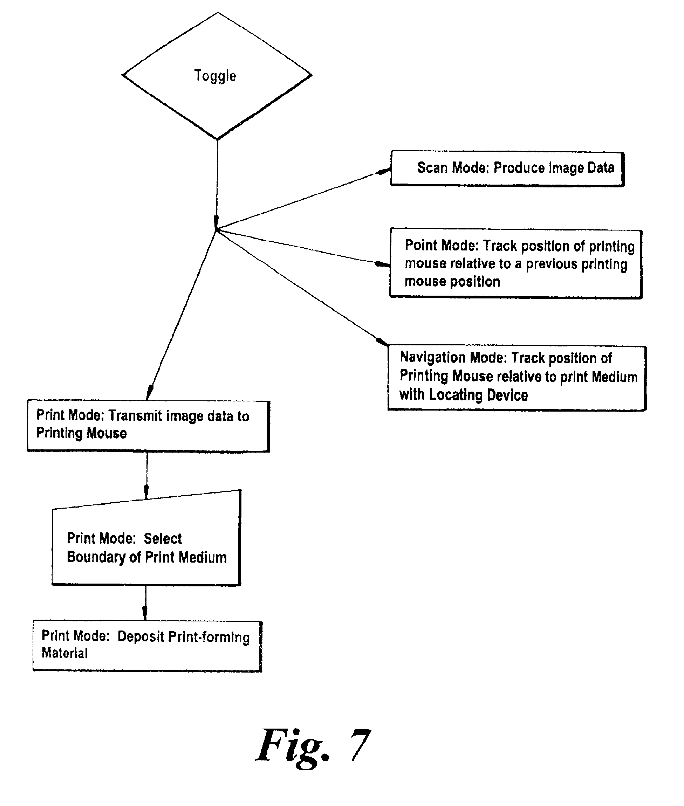

In one embodiment, the button 66 is a toggle switch. As described later with respect to FIG. 7, the toggle switch 66 enables the user to switch between the print, scan and point modes of the mouse processor 30. The switch enables the mouse processor 30 to signal software in the main processor 18 the operation that is occurring, such as scanning, printing, and pointing. In another embodiment, the toggle switch 66 is a mechanically latching switch (push to set, push again to release) on the printing mouse.

When the switch 66 toggles to the point mode, the printing mouse functions as the typical electronic mouse to control the cursor 17 and to input commands using buttons 64, 65.

When the switch 66 toggles to the scan mode, the printing mouse functions to scan an image on the medium 11 using the image sensor 42, as discussed more fully below. The scanned image data from the image sensor 42 is converted to signals that are transmitted to the main processor 18 through the interface 14. The main processor 18 displays the image on the monitor 16 or stores the image in the image file 84. The buttons 64, 65 activate scan commands for the scanning device 40 such as start, and stop.

Each support spacer 62 keeps the inkjet printer cartridge 52 spaced from the medium 11. The support spacers 62 may be replaced by bumps, or indentations on the housing 60 of the printing mouse 10. The support spacer 62 is at least one of rollers, wheels, a trackball, and a protrusion from the bottom surface 68. In one embodiment, the drive motor 70 of the mouse processor 30 is coupled with the wheels, rollers, or the trackball of the support spacers 62 to move the printing mouse 10 in response to the printing mouse processor 30, as described in more detail below. As shown in the directional arrows between components of the printing mouse in FIGs. 2a and 2b, the mouse processor 30 receives navigation data from the location sensors (discussed below) to signal the drive motor 70 to move the printer housing according to the position information received. In another embodiment, the printing mouse is maneuvered manually.

The positions of the inkjet cartridge 52, the location sensors 21, 22, the image sensor 42, and the four support spacers 62 shown in FIG. 4 is one example of the arrangement of the components. The arrangement may vary. The number of the location sensors, image sensors, and support spacers 62 vary with different embodiments. For example, the printing mouse 10 can operate well with only one location sensor 21, and one support spacer 62. Also, in the embodiment where there is no scanning device 40, there is no image sensor 42.

The inkjet printer cartridge 52 has a supply of print-forming material, such as ink, and a print head that deposits the print-forming material. The printhead is shown in FIG. 4. In one embodiment, the inkjet cartridge 52 is a conventional inkjet cartridge, such as the inkjet cartridges that are used in Hewlett Packard's line of Deskjet printers. In another embodiment, the inkjet cartridge 52 is specially designed to have a greater number of inkjet orifices in order to print wider areas on the medium as the inkjet cartridge scans over the medium. In one embodiment, the inkjet cartridge 52 contains only black ink, for grayscale printing. Alternatively, the inkjet cartridge 52 contains cyan, magenta, yellow, and black ink, for color printing. In one embodiment, the ink in the ink cartridge is instant-drying ink such that the contact between the printing mouse and the ink does not smudge the medium 11.

In one embodiment, the power source 80 is the battery supplying power to the electronic components of the printing mouse 10. The battery may be a rechargeable nickel-cadmium battery or a conventional alkaline battery. The power supply 80 in the printing mouse 10 can be eliminated if, alternatively, the cable 24 is used to establish the communication link between the printing mouse 10 and the computer system 12. In this embodiment, a supply of power is transferred from the host computer system 12 to the printing mouse 10 through the cable.

### Location Sensor

In one embodiment, the locating device 20 has at least one location sensor 21, 22 that is used to track movement of the printing mouse 10 relative to the medium 11 during a printing process. Each location sensor 21, 22 is an optical correlator and includes a lens and an array of optoelectronic elements. The size of the array of optoelectronic elements can vary, depending on the type of optoelectronic elements used and the desired area of a medium to be captured by the location sensors 21, 22. Hereby incorporated by reference are US Patent Nos. 5,644,139, 5,578,813, 5,927,872, and 5,994,710 describing devices and methods of forming scanned electronic images and related subject matter, more particularly, describing optical location sensors.

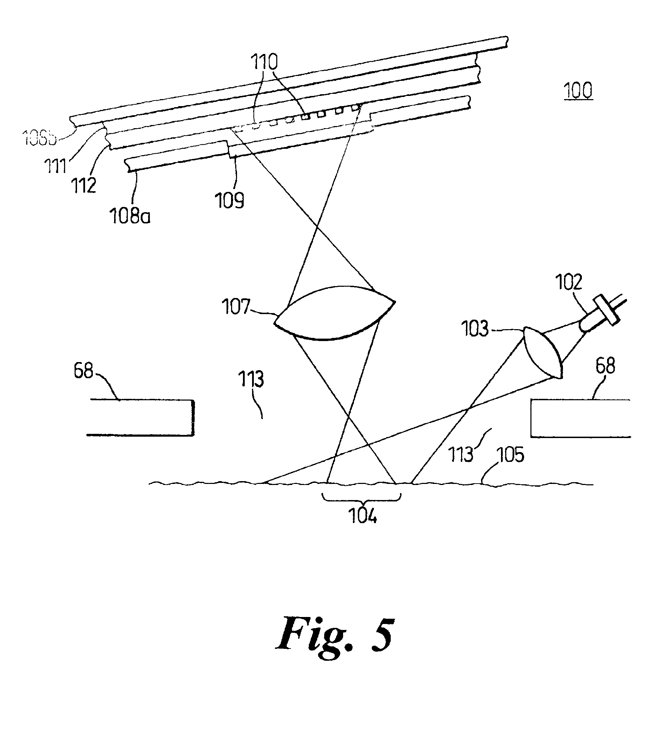

Refer now to FIG. 5, wherein is shown a simplified representation of a cut-away side view of an imaging and navigation arrangement 100, which illustrates the location sensors 21, 22 of this embodiment. An LED 102, which may be an IR LED, emits light which is projected by lens 103 (which instead of being separate may be an integral part of the LED's package), through orifice 113 in bottom surface 68 of the printing mouse 10 and onto a region 104 that is part of a work surface (medium) 105. Although it has been omitted for clarity, the orifice 113 might include a window that is transparent for the light from LED 102, and which would serve to keep dust, dirt or other contamination out of the innards of the printing mouse. Work surface 105 might belong to a special object, such as a mouse pad, or more generally, it will not, and might be the surface of nearly anything except smooth glass. Examples of suitable materials include, but are not limited to, paper, cloth, laminated plastic tops, painted surfaces, frosted glass (smooth side down), desk pads, real wood, fake wood, etc. Generally, any micro textured surface having features whose size falls within the range of 5 to 500 microns will do.

The illumination of micro textured surfaces is most effective when done from the side, as this accentuates the pattern of highlights and shadows produced by surface height irregularities. Suitable angles of incidence for illumination cover the range of about five to twenty degrees. A very smooth or flat surface (e.g., one that has been ground and polished) having simple variations in reflectivity owing to (micro scale) compositional variation works, too. In such a case (and assuming that it can be guaranteed) the angle of incidence for the illumination could approach ninety degrees, since the urge to create shadows goes away. However, such a smooth yet micro detailed surface is not what we would ordinarily think of when we say "arbitrary surface", and a printing mouse intended for use on an "arbitrary surface" that is more likely micro textured would work best if equipped to provide a grazing angle of incident illumination.

An image of the illuminated region 104 is projected through an optical window 109 in package portion 108a of an integrated circuit and onto an array 110 (say, 48 times 48) of photo detectors. In particular, for each location sensor, IR light reflected from the micro textured surface is focused onto the photo detectors. This is done with the aid of lens 107. The package portion 108a might also dispense with separate window 109 and lens 107 by combining them into one and the same element. The photo detectors may comprise a square array of, say, 148 detectors on a side, each detector being a photo transistor whose photo sensitive region is 45 by 45 microns and of 60 microns center to center spacing. The photo transistors charge capacitors whose voltages are subsequently digitized and stored in a memory. The array 110 is fabricated onto a portion of an integrated circuit die 112 affixed by an adhesive 111 onto package portion 108b. What is not shown are any of the details of how the integrated circuit is held in place (probably by a printed circuit board), the shape or composition of the lenses, or of how the lenses are mounted; it is clear that those things are doable in a conventional manner. It is also clear that the general level of illumination of region 104 may be controlled by noticing the output levels of the photo detectors and adjusting the intensity of light issuing from the LED 102. This could be either continuous control or pulse width modulation, or some combination of both.

The number of photo detectors in the array and the frame rate at which their contents are digitized and captured cooperate to influence how fast the printing mouse can be moved over the work surface and still be tracked.

Using the location sensors 21, 22, tracking is accomplished by comparing a newly captured sample frame with a previously captured reference frame to ascertain the amount of movement, and direction of movement, in two planar dimensions. Processing elements operate on a particular pixel and its nearest neighbors to produce an array of correlation values at each pixel location. The correlation values are based upon comparisons between a current image of the surface structure and a stored image representing a known position of inherent structural features, wherein the stored image serves as a position reference.

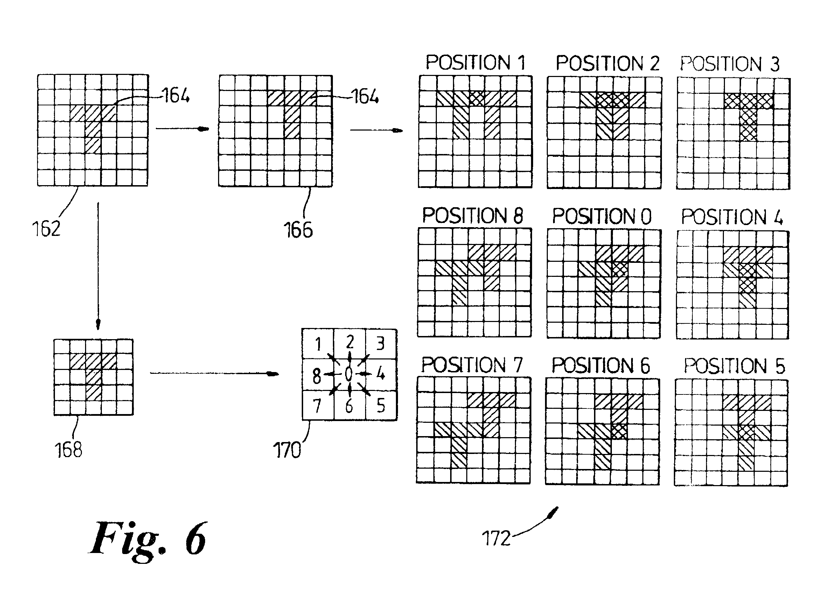

As shown in FIG. 6, one way to track (and obtain correlation values) is to shift the entire content of one of the frames by a distance of one pixel (corresponds to a photo detector), successively in each of the eight directions 170 allowed by a one pixel offset trial shift (one over, one over and one down, one down, one up, one up and one over, one over in the other direction, etc.). There is also a ninth trial "null shift". After each trial shift those portions of the frames that overlap each other are subtracted on a pixel by pixel basis, and the resulting differences are (preferably squared and then) summed to form a measure of similarity (correlation) within that region of overlap. Larger trial shifts are possible, of course (e.g., two over and one down), but at some point the attendant complexity ruins the advantage, and it is preferable to simply have a sufficiently high frame rate with small trial shifts. The trial shift with the least difference (greatest correlation) can be taken as an indication of the motion between the two frames. That is, it provides raw movement information which may be scaled and or accumulated to provide display pointer movement information of a convenient granularity and at a suitable rate of information exchange.

As shown in FIG. 6, a transparent (reference) film 162 of clear and dark patterns arranged as if it were a checker board, except that the arrangement is perhaps random. A second (sample) film 166 has the same general pattern is overlaid upon the first, except that it is the negative image (dark and clear are interchanged). Now the pair is aligned and held up to the light. As the reference film is moved relative to the sample film the amount of light admitted through the combination will vary according to the degree that the images coincide. The positioning that admits the least light is the best correlation. If the negative image pattern of the reference film is a square or two displaced from the image of the sample film, the positioning admits the least light will be one that matches that displacement. We take note of which displacement admits the least light; for the printing mouse we notice the positioning with the best correlation and say that the mouse moved that much. That, in effect, is what happens within an integrated circuit (IC) having photo detectors, memory and arithmetic circuits arranged to implement the image correlation and tracking technique we are describing.

It would be desirable if a given reference frame could be re-used with successive sample frames. At the same time, each new collection of nine (or twenty-five) correlation values that originates from a new image at the photo detectors (a next sample frame) should contain a satisfactory correlation. Several successive collections of comparison frames is obtained from the 48 by 48 reference frame. What allows this to be done is maintaining direction and displacement data for the most recent motion (which is equivalent to knowing velocity and time interval since the previous measurement). This allows "prediction" of how to shift the collection of pixels in the reference frame so that for the next sample frame a "nearest neighbor" is expected to correlate. This shifting to accommodate prediction throws away, or removes, some of the reference frame, reducing the size of the reference frame and degrading the statistical quality of the correlations. When an edge of the shifted and reduced reference frame begins to approach the center of what was the original reference frame it is time to take a new reference frame. This manner of operation is termed "prediction". The benefits of prediction are a speeding up of the tracking process by streamlining internal correlation procedure (avoiding the comparison of two arbitrarily related 48 by 48 arrays of data) and a reduction of the percentage of time devoted to acquiring reference frames.

In one embodiment, the printing mouse has a "hold" function that suspends the production of movement signals to the computer, allowing the printing mouse to be physically relocated on the work surface without disturbing the position of the pointer on the screen. This is used, for example, when the operator runs out of room to physically move the printing mouse further and the screen pointer has to go further. The usual maneuver executed by the operator for, say, an extended rightward excursion, is to simply pick the printing mouse up at the right side of the work surface (a mouse pad, or perhaps simply the edge of clearing on an otherwise cluttered surface of his desk), set it down on the left and continue to move it to the right. During this maneuver, the motion indicating signals from is kept undergoing spurious behavior, so that the pointer on the screen behaves in an expected and non-obnoxious manner. The "hold" function may be performed automatically by a proximity sensor on the underside of the mouse that determines that the mouse is not in contact with the work surface, or by noticing that all or a majority of the pixels in the image have, to put simply, "gone dark."

### Point Mode

In one embodiment, the pointing device 32 functions as an electronic computer mouse. The pointing device 32 has a motion detector detecting two-dimensional motion of the printing mouse. The pointing device produces a positional signal which is used for controlling movement of the cursor 17 on the monitor display so that the cursor moves on the monitor display according to the motion of the printing mouse. A typical motion detector/ pointing device is a trackball (not shown) mounted in the printing mouse. As in the conventional mouse, in one embodiment the trackball is centrally located within the bottom surface, and is a rubber-surfaced steel ball. The ball extends into a hole in the bottom surface of the housing. The trackball rotates according to motion of the printing mouse on a plane of the medium 11. Interior to the printing mouse are rollers, or wheels, that contact the ball at its equator and convert its rotation into electrical signals representing orthogonal components of the printing mouse motion. The position signal is transmitted to a position tracker 88 of the main processor 18, as shown in FIG. 2a. The position tracker 88 uses the position signals received from the mouse processor 30 to control movement of the cursor 17 on the monitor display 16. The user moves the printing mouse as necessary to get the displayed pointer or cursor into a desired location or position.

In one embodiment, the locating device 20 functions as the pointing device 32 when in the point mode. Similar to the above described operation, the location sensors 21, 22 compare the image just printed with the image data in order to monitor the movement of the printing mouse 10. For example, the location sensor 21, 22 uses optically imaged surface variations in the medium (i.e. paper fibers or illumination patterns formed by highly reflective surface features and shadowed areas between raised surface features).

Array-position information is determined using methods such as those employed in operation of a computer "mouse." As a linear sensor array is moved, the rotation of wheels, balls or rollers that are in contact with the medium is sensed, and the position information is determined from the mechanical details of the rotation. In general, the surface of the mechanical element in contact with the original has a high coefficient of friction, e.g. rubber, so as to resist slip and skid. A cylindrical roller or two wheels connected by a rigid axle may be used to enforce a single translational degree of freedom during the scanning process. A straight-edge or other fixture is often used to fix the scan direction with respect to the original and to further enforce the translational constraint provided by the pair of wheels or the roller. Nevertheless, the position encoder approach is one that is often susceptible to slips and skips, so that the pixel array loses its correspondence with the image on the original.

In the point mode, navigation data from one of the location sensors is placed into memory 78 and sent to the position tracker 88 executing on the computer. In the point mode, the position data from other location sensors are ignored, as is image data from the image sensor 42 (i.e., these mechanisms are simply never asked to report their data). In one embodiment, programming stored in the memory converts the navigation data to be sent to the position tracker 88 into one of the standard mouse protocols, such as IBM's PS/2 or Microsoft mouse protocol. Of course, some other mouse data protocol may be used, as well. It will, of course, be readily appreciated that the mouse processor 30 and memory 78 could be replaced by a suitable state machine or other logic circuitry less extensive than a microprocessor.

### Print Mode

The mouse printer prints segments of the image onto the medium as the mouse printer travels across the medium during a printing process. Each segment of the image is printed onto a particular location on the medium to form a composite of the image. As shown in FIG. 2a, the main processor 18 has an image file 84 with image data that is to be printed by the printing mouse 10. The image data is used to generate printing commands 86 which are transmitted to the mouse processor 30 through the interface 14. The image data is stored in the memory 78. In one embodiment, the mouse processor 30 converts the image data signals received into print data. In an alternative embodiment, the image data is converted with software in the computer 12.

As shown in FIG. 7, when the switch 66 toggles to the print mode, the image data in the image file 84 generates printing commands 86 which are transmitted to the mouse processor 30 through signals. The mouse processor 30 converts the signals into print data and sends to the printing device 50 that portion of the print data representing the portion of the image that is to be printed.

As shown in FIG. 7, the user is then prompted to select the boundary of the medium. In one embodiment, the user defines two opposite edges of the medium onto which the image is to be printed, thereby defining a rectangular print area. The two opposite edges are inked by the print head using pattern that is an easily recognizable by the scanning device 40. The printing mouse 10 is then able to print. However, if the mouse has been lifted away from the medium 11, the user is prompted to place the printing mouse over one of the inked edges, such as the top left corner, so that the printing mouse is able to print. If the printing mouse 10 is programmed, as a default, to begin printing the upper left corner of the image, the starting position is where the user desires the upper left corner of the image to be printed. In another embodiment, there is a starting location for the printing image other than in the upper left corner.

When the toggle switch 66 activates the print mode, the buttons 64, 65 activate print commands for the printing device 50. In one embodiment, the button 64 activates a print command associated with the print head depositing the print-forming material onto the medium. For instance, the button 64 is an on-off switch for the inkjet printhead. In one embodiment, the button 65 operates a pull down menu on the monitor screen for options on printing.

In one embodiment, the button 64 is pressed and released to activate the print head depositing ink onto the medium 11. This embodiment is used with the drive motor 70 automatically moving the printing mouse 10 over the medium 11. In this instance, printing occurs when the button 64 is activated, and the drive motor 70 moves the printing mouse 10 along the medium. In one embodiment, the printing mouse 10 ceases printing when finished printing the image on the medium, or when the user sends a signal to the printing mouse to cease printing, such as depressing a stop key on the keyboard 19.

Additionally or alternatively, the button 64 remains pressed by the user during the operation of the printing device 50. When the button 64 is released, the printing mouse 10 ceases printing. This alternative embodiment is used, for instance, when the printing mouse is manually moved over the medium 11. In this instance, printing occurs when the printing mouse is manually moved along the medium, and the button 64 is activated.

When the printing mouse 10 is moved along the medium during the printing process, the sensors 21, 22, 42 determine the relative movement of the printing mouse 10 with respect to the medium, as previously described in the location sensor section. Depending on the new position of the printing mouse 10, the mouse processor 30 sends corresponding print data to the inkjet cartridge 52. In particular, the location sensor 21, 22 and/or the image sensor 42 compares the image printed with the image data in order to monitor the printing job.

In one embodiment, the location sensors 21, 22, 42 are used during a normal course of the printing process. The printing mouse 10 is configured to periodically update the computer system 12 by transmitting data signals concerning the printed areas (received from the sensors) versus the areas yet to be printed. This information is used by the computer system 12 to highlight the portion of the printed image in the displayed image on the monitor display, allowing the user to determine the progress of the printing process. This information is also utilized by the printing mouse 10 to ensure that the printing mouse 10 will not reprint over a printed area when the printing mouse 10 is positioned over the printed area. In this manner, the whole image is printed when the printing mouse 10 has covered the entire area of the paper in which the image is to be printed.

The printing mouse 10 may have horizontal, vertical, diagonal, or even circular printing paths while the printing device is operating. The direction of the printing mouse 10 does not affect the printing process.

In one embodiment, the feedback unit 82 provides feedback to the user of the printing device 50 when in the print mode. The feedback unit 82 indicates to the user when movement of the printing mouse 10 is occurring faster than the printing device 50 can operate optimally, or can indicate the print quality, for instance, if the user is manually maneuvering the mouse and misses areas to be printed upon. When the drive motor 70 is in operation, the feedback unit 82 is not used. For instance, in the manual mode the user is guided in movement of the printing mouse 10 by audio feedback from speakers (not shown) attached to the computer system 12 and/or visual feedback from the monitor display 16. In another embodiment, the feedback unit 82 operates in a similar manner when in the scan mode.

### Scan Mode

The image sensor 42 is shown as a linear array of discrete optically sensitive elements. As shown in FIG. 4, located diagonally across the bottom of the printing mouse 10 is a contact image sensor (CIS) 42. For reasons of physical compactness, the image sensor 42 of the scanning device 40 is the contact image device [CIS], but for applications in which compactness is less of a concern or a smaller image is desired, sensors employing projection optics may be employed, with magnification less than unity. (Less conventionally, contact imaging can be obtained using interleaved array elements of sources and proximal sensors, without any imaging lenses. Conventional imaging sensors for scanning applications may be used. The imaging sensor may be part of a unit that also includes an illumination source, illumination optics, and image transfer optics, as discussed above with respect to location sensors.)

The CIS might, for example, be a TSL218 from Texas Instruments of Dallas, Tex. (This TI part is a 200 dot/inch (DPI) 512 by 1 linear array with buffered analog sample and hold suitable for 8 bit gray-scale applications, described by a six page data sheet SOES014B of August 1994 and revised in November 1995. The TSL401 is a physically shorter {128 by 1} 400 DPI gray-scale part described by SOES011 of March 1996.) In FIG. 4, the CIS 42 has been inclined at about 45 degrees to the principal front/back and left/right side axes of the printing mouse.

The scanning device assumes motion in one direction and scanning [either with charge coupled devices (CCD's) or contact image sensors (CIS's)] in a direction perpendicular to that motion. This is often enforced mechanically, for instance, by the roller or wheel (the support spacer 62) placed to move the printing mouse perpendicularly to the image sensor. The roller or wheel prevents a twisting or yawing motion of the printing mouse as it is moved across the document. Rotation of the roller indicates displacement, and is taken as a definition of the aforementioned motion in one direction.

The idea of the 45 degree incline of the CIS is to allow scanning with the printing mouse 10 in along both principal axes, as well as in all other directions except in a direction parallel to the image sensor. It is of course, a compromise, in that the effective length of the CIS is reduced by about 30% for motion parallel to all four sides (front, back and sides) of the printing mouse; the full width of the image sensor/CIS 42 is available only in directions perpendicular to the image sensor.

In an alternative embodiment (not shown), the image sensor/CIS 42 is situated parallel to the front/back principal axis of the printing mouse. This optimizes the printing mouse for scanning motion in a direction to the sides of the printing mouse. In another alternative embodiment (not shown), two orthogonal CIS's are placed on the bottom of the printing mouse. In this admittedly deluxe arrangement, the mouse can be used to scan in any direction.

In the embodiment of FIG. 4, the image sensor 42 is a linear array of electrooptical elements, while the navigation approach utilizes at least one two-dimensional array of location sensor elements. By placing two separate two-dimensional navigation arrays, the scanning device 40 is afforded three degrees of freedom of movement. If the original (medium) is planar, two of the degrees of freedom are translational and are perpendicular to each other within the plane of the original, while the third degree of freedom is rotational about the normal to the plane of the original. In addition, pixel values from the location sensors are operated upon by processing elements (not shown) to determine proper mapping of image data from the image sensor 42.

The accuracy of rotation tracking is enhanced by the use of two navigation arrays, with each array having a smaller array extent than would be necessary if only a single navigation array were used. Preferably, the location sensors 21 and 22 are reasonably far apart and fixed relative to the image sensor, so that rotational motion of the printing mouse 10 can be more accurately determined. While the preferred embodiment is one in which a location sensor is a two-dimensional array, linear arrays may also be used.

A monochromatic gray-scale CIS simply has one color of illumination, which is provided near the pixels to be sensed and under a light excluding shroud that blocks ambient light. A straightforward modification of the image sensor 42 enables sensing of color images. For example, the printing mouse has three linear arrays (not shown) that are parallel to one another, each with at least one embedded filter element that selectively passes red, green and blue components of the incident light respectively, would allow color imaging. Alternatively, a single array having broad-band sensitivity may be sequentially illuminated by red, green and blue light sources. The three different results are digitized to produce RGB triples that represent a color image of the document.

The scanner (or scanning device 40) with the CIS typically has linear arrays of phototransistors or photodiodes with associated charge amplifier circuitry for each photo-sensing element. Charge is allowed to accumulate for a selected length of time, after which the amount of charge for each pixel is sampled, on after the other. Most CIS's have an internal "one of n-line" selection mechanism that sequentially places each pixel output onto a common analog output bus in response to a supplied clock signal and a start signal. It is common for the analog bus and the control signals to be arranged so that parts can be easily ganged to extend the effective length of the CIS without having a corresponding increase in the number of control signals that often have individual attention. Each newly clocked out analog value is digitized, say, to eight bits of precision. The resulting sequence of bytes is then taken as the image data that is to be processed by whatever application is in use.

The captured image provided by a scanner is typically a pixel data array that is stored in memory in a digital format, as described above. A faithful mapping of the original image to the pixel data array renders a distortion-free image. Data rates from the image sensor tend to limit the scanning speed. The scanners provide feedback to the user to maintain the appropriate speed for the desired image resolution. In one embodiment, electromagnetic brakes are used to prevent the user from dragging the scanner over the image too rapidly, with the mechanical resistance increasing with increases in scanning speed.

Here is a brief summary of what the user does to scan an image from a medium or work surface. Using the printing mouse as a conventional computer mouse (i.e., point mode), the user selects an appropriate program whose internal operation is quite similar to that used by a free hand scanner to assemble an image. Once any parameters were specified (via either mouse/menu operation or with the keyboard, or both), the user places the printing mouse on the document to be scanned and operates the toggle switch 66 to the scan mode. In one embodiment, the image would appear on the screen of the computer as scanning proceeded. The user then swipes the printing mouse back and forth to scan the document, being guided as to missed spots by the image appearing on the monitor. Scanning the same portion of the document over again simply refreshes the image, as it were. The data produced from each scanning operation is processed to compensate for arbitrary scanner motion and permit finding a value for each element in the pixel grid associated with the final representation of the document or image. The image segments are stitched together to produce a complete image. When the scanning is complete, toggle switch 66 is activated to return to the point mode. The application can be told what to do with the image (print it, store in a file, edit it, etc.) using conventional user interface techniques.

In one embodiment, the scanning device 40 is operational during the print mode. The scanning device scans the medium to determine the image data of what has already been printed, much like when the scanning device 40 scans the image on the medium as described above. The printed image is correlated with the original image data. If the print function is complete, the printing device 50 stops. If the print function is not complete and more image data is to be printed on the medium 11, the printing device 50 continues to operate. This is more likely to occur when manually moving the printing mouse 10, rather than using the drive motor 70. For instance, when the user waves the printing mouse 10 over the medium, the user may miss some small patches of the medium where the image should have been printed.

It is contemplated to use the invention for applications in which navigation information is independent of inherent structure-related properties of the medium (original or work surface). For example, one or both of the location sensors 21 and 22 of FIG. 4 may be used with the printing device to form successive images of print on the original, with correlation of the successive images being used to determine the position and the orientation of the image sensor 42 along the original (medium) 11. In this embodiment, all three sensors 21, 22, and 42 image text on the original, but only the signal from the image sensor 42 is used to acquire image data. The signals from the location sensors 21 and 22 are used to acquire image-based navigation information.

Navigation information for rectifying image data could feasibly be acquired by fixing other position-tracking means to the scanning device, including encoding wheels and balls, computer mice track balls, registration grid-detectors, accelerometers, mechanical linkages, non-contacting electromagnetic and electrostatic linkages and time-delay integration sensor arrays. In many of these alternative embodiments, navigation information for rectifying the image data is acquired in manners independent of any inherent structure-related properties of the original, since position tracking does not include image acquisition.

In particular, for the locating device 20, non-imaging approaches can also be used to acquire and process X, Y and theta position information. Unfortunately, many of the alternative means impose various limitations upon compactness, convenience of use, speed, freedom of motion, power consumption, accuracy, precision, and/or cost. One imaging-independent alternative available to acquiring position information is to provide one or more encoding wheels in place of the location sensors. The encoding wheels may then roll without slip upon the scanned surface, enabling the scanning device to travel along straight or curvilinear trajectories. It is not critical that the encoding wheels be on a common axis. The wheels may be mounted to swivel. Encoders coupled to monitor rotations would provide the input data from which to calculate position and orientation of an imaging sensor relative to a starting position and orientation.

Another image-free approach to acquiring navigation information is to use track balls similar to those for a computer mouse. A track ball could be used in place of each encoder wheel described above. Encoders would be used to obtain two-dimensional displacement information from each track ball. In another approach, optical or electronic (capacitive, resistive or inductive) sensors may be used in place of the location sensors of FIG. 2 in order to sense position and orientation relative to a cooperative (active or passive) grid or other reference constructed in an underlying tablet that, in turn, serves as a support for the original being scanned.

Another image-free approach to acquiring position and orientation information is to provide an accelerometer. An on-board inertial navigation platform may be used, with accelerations being sensed and integrated either once to obtain velocities or twice to obtain positions. Or velocities of spring-suspended masses could be sensed and integrated once in order to obtain positions. Gyroscopes could be employed in a direct sensing of orientation.

Yet another alternative approach would be to use any of a variety of mechanical linkages with which to track position and orientation relative to reference coordinates fixed with respect to the medium being scanned. Position and orientation information could be obtained by means of sensors coupled to measure the relative movement of the mechanical members. These sensors could be of either the relative or absolute type and could be based on direct position and orientation sensing, or the sensing of accelerations or velocities that would then be integrated with respect to time, once or twice, to obtain positions. Non-contacting remote sensing could also be used to measure position and orientation of the scanning device relative to reference coordinates fixed with respect to the scanned original. Examples of such non-contacting sensing would include those that use electro-magnetic fields, waves or beams (e.g. at optical or radio frequencies); electric effects (e.g. capacitive); and/or magnetic effects (e.g. inductive). These approaches could utilize standard or differential Global Positioning technologies and potentially could use satellites. These approaches can also include traditional navigation/surveying methods, such as triangulations. They could also include techniques employed in robotics technologies, such as using shaped light beams and interpreting position from images of where these beams intercept the moving object.

It should be recognized that in addition to thermal inkjet, thisI nvention lends itself to alternative digital printing and drop formation technologies including: electrophotography, dye sublimation, impact printing, piezoelectric drop ejection, and flex-tensional drop ejection.

Although this invention has been described in certain specific embodiments, many additional modifications and variations will be apparent to those skilled in the art. It is therefore to be understood that this invention may be practiced otherwise than as specifically described. Thus, the present embodiments of the invention should be considered in all respects as illustrative and not restrictive, the scope of the invention to be indicated by the appended claims rather than the foregoing description.

## Claims

1. A printing mouse for printing an image onto a medium and for controlling a cursor on a monitor display of an electrical device, the printing mouse comprising:
a housing having a pointing device and a printing device,
wherein the pointing device converts movement of the housing over the medium into signals that control the cursor,
wherein the printing device forms the image on the medium.

2. The printing mouse of claim 1 wherein the housing has a print button, wherein the print button activates a print command associated with the printing device.

3. The printing mouse of claim 1 wherein the housing has a toggle switch, wherein the toggle switch has a first position that corresponds with the pointing device, and a second position that corresponds with the printing device.

4. The printing mouse of claim 1 wherein the housing has a scanning device that produces signals from imageable features on the medium.

5. The printing mouse of claim 1 wherein the scanning device has an image sensor that is responsive to illumination patterns in the medium.

6. The printing mouse of claim 5 wherein the printing device is responsive to the image sensor.

7. The printing mouse of claim 1 wherein the printing device has an ink jet printer cartridge.

8. The printing mouse of claim 7 wherein the ink jet printer cartridge uses instant drying ink.

9. The printing mouse of claim 1 wherein the housing has an interface that is capable of coupling the printing mouse to the electronic device.

10. The printing mouse of claim 9 wherein the housing has a printing mouse processor that is operatively connected with the interface, the pointing device, and the printing device, the printing mouse processor receiving data from the electronic device through the interface, wherein the data is used by the printing mouse processor to control the printing device.

11. The printing mouse of claim 10 wherein the housing has a memory coupled to the mouse processor, wherein the memory stores the image data received from the electronic device.

12. The printing mouse of claim 9 wherein the interface of the housing has a transceiver that enables the printing mouse to wirelessly communicate with the electronic device.

13. The printing mouse of claim 1 wherein the printing mouse includes a power source that supplies power to at least one of the printing device, and the pointing device.

14. The printing mouse of claim 1 further comprising a locating device, wherein the locating device has a location sensor that produces signals indicative of motion along the medium.

15. The printing mouse of claim 4 further comprising a print mode associated with the printing device, a scan mode associated with the scanning device, and a point mode associated with the pointing device, wherein the housing has a toggle switch, wherein the toggle switch has a first position that activates the point mode, a second position that activates the print mode, and third position that activates the scanning mode.

16. The printing mouse of claim 10 wherein a bottom surface of the housing has at least one of rollers, wheels, and a ball enabling movement of the housing, the printing mouse further comprising a drive motor coupled with the at least one of rollers, wheels, and a ball to activate movement of the housing, wherein the drive motor is coupled with and responsive to the printing mouse processor.

17. A computer system comprising:
a processor;
a monitor display coupled with the processor and having a cursor; and
a printing mouse coupled with the processor,
wherein the printing mouse has a housing that moves along a medium,
wherein the housing has a pointing device that converts movement over the medium into digital signals to control the cursor, and a printing device.

18. The computer system of claim 17 wherein the printing device has a printhead, the system further comprising a service station that services the printhead of the printing mouse.

19. The computer system of claim 17 further comprising a USB bus connecting the printing mouse to the processor.

20. The computer system of claim 17 further comprising a cable supplying power to the printing mouse.

21. The computer system of claim 17 wherein the processor is an existing processor, the system further comprising a coupling device that couples the existing processor with the printing mouse, wherein the coupling device connects with the existing processor.

22. The computer system of claim 21 wherein the coupling device is wirelessly coupled with the printing mouse.

23. A method of printing using a printing mouse comprising:
selecting a print area using the printing mouse in a point mode; and
printing on a medium using the printing mouse in a print mode.

24. The method of claim 23 wherein in the point mode, a pointing device converts movement of the printing mouse over the medium into signals that control a cursor.
